# EUROPÄISCHE PATENTSCHRIFT

(11) **EP 1 054 143 B1**
(45) Veröffentlichungstag und Bekanntmachung des Hinweises auf die Patenterteilung: **24.07.2002**
(21) Anmeldenummer: 00102593.1
(22) Anmeldetag: 08.02.2000
(51) Int. Cl.: F02B 47/08, F02M 25/07

(54) **Verfahren zur internen Abgasrückführung bei mehrzylindrigen Brennkraftmaschinen**
Method for internal EGR in multicylinder combustion engines
Procédé de recirculation interne de gaz d'échappement pour moteurs à plusieurs cylindres

(30) Priorität: 18.05.1999 DE 19922697
(43) Veröffentlichungstag der Anmeldung: 22.11.2000
(73) Patentinhaber: MAN NUTZFAHRZEUGE AG, 80995 München (DE)
(72) Erfinder: Neitz, Michael, Dipl.-Ing., 90768 Fürth (DE); Schnitzer, Otto, Dipl.-Ing., 90489 Nürnberg (DE); Dölling, Martin, 90459 Nürnberg (DE)

(56) Entgegenhaltungen:
- EP-A- 0 397 360
- DE-C- 4 203 365
- US-A- 4 722 315
- US-A- 5 226 401

## Beschreibung

Die Erfindung bezieht sich auf ein Verfahren zur internen Abgasrückführung gemäß dem Gattungsbegriff des Patentanspruches 1.

Zur Reduzierung der Stickoxide bei luftverdichtenden Brennkraftmaschinen ist es bekannt, in gewissen Betriebszuständen Teile des Abgases in die Brennkraftmaschine zurückzuführen. Die Abgasrückführung erfordert einen relativ hohen baulichen Aufwand. (siehe dazu z.B. US-A-5.226.401)

Es ist daher Aufgabe der Erfindung den baulichen Aufwand zur Abgasrükführung gering zu halten.

Gelöst wird die Aufgabe zum einen durch die kennzeichnenden Merkmale des Patentanspruches 1.

Durch das Offenhalten des Auslasses eines Zylinders kann der an den gleichen Auspuffkrümmer angeschlossene Auslaß eines weiteren Zylinder zur Abgasrückführung genutzt werden, ohne daß wesentliche bauliche Veränderungen an der Brennkraftmaschine vorgenommen werden müssen.

Die Aufgabe kann zum anderen durch die kennzeichnenden Merkmale des Patentanspruches 2 gelöst werden.

Durch das Rückströmen von Abgas in den Einlaß und das darauffolgende Wiederan saugen von Teilen des Abgases kann eine Abgasrückführung ohne größere bauliche Veränderungen erfolgen.

Das erfindungsgemäße Verfahren wird an Hand eines Niederdruckindikatordiagramms und an Hand von Ventilerhebungskurven erläutert.

Es zeigt:
- Fig. 1: ein Niederdruck-Indikatordiagramm mit dem Druckverlauf einer Ladeluftleitung, eines Auspuffkrümmers und eines Zylinders
- Fig. 2: einen Öffnungsverlauf eines zweiten Auslasses bei einer 6 Zylinder Brennkraftmaschine während der Abgasrückführung
- Fig. 3: einen Öffnungsverlauf eines zweiten Auslasses bei einer 4 Zylinder Brennkraftmaschine während der Abgasrückführung
- Fig. 4: einen Öffnungsverlauf eines Einlasses während der Abgasrückführung

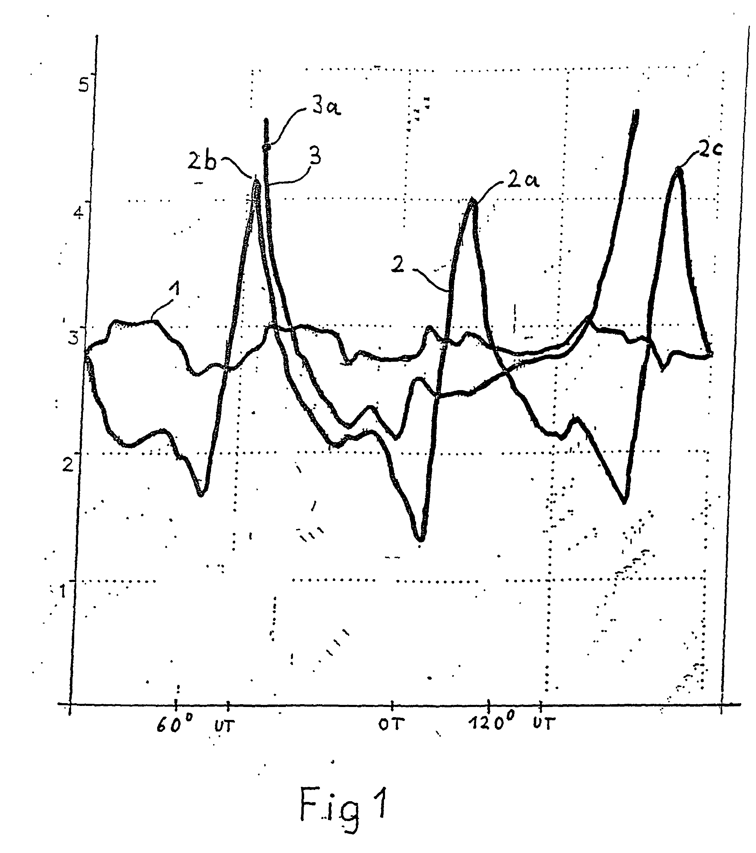

In Figur 1 ist der Druckverlauf in einer Luftleitung (hier eine Ladeluftleitung), einem Auspuffkrümmer und in einem Zylinder dargestellt. Der dargestellte Druckverlauf ist über dem Kurbelwinkel aufgetragen und wurde durch Niederdruckindizierung einer 6 Zylinder Brennkraftmaschine gewonnen.

Die Kurve 1 gibt den Druckverlauf in der Ladeluftleitung wieder. Der Ladeluftdruck pendelt um den Wert von ca. 3 bar.

Die Kurve 2 zeigt den Druckverlauf in einem Auspuffkrümmer. Man erkennt deutliche Druckspitzen 2a, 2b, 2c die durch Öffnen des Auslasses von Zylindern entstehen. Diese Druckspitzen 2a, 2b, 2c die einen Wert von ca. 4 bar annehmen, liegen deutlich über dem Aufladedruck von 3 bar und werden nach dem erfindungsgemäßen Verfahren für eine Abgasrückführung genutzt.

Die Kurve 3 stellt den Druckverlauf in einem Zylinder gegen Ende der Expansion dar. Da der Druck ab dem Punkt 3a noch deutlich über dem Ladeluftdruck gemäß Kurve 1 liegt, kann dieses positive Druckgefälle ebenfalls für die Abgasrückführung genutzt werden.

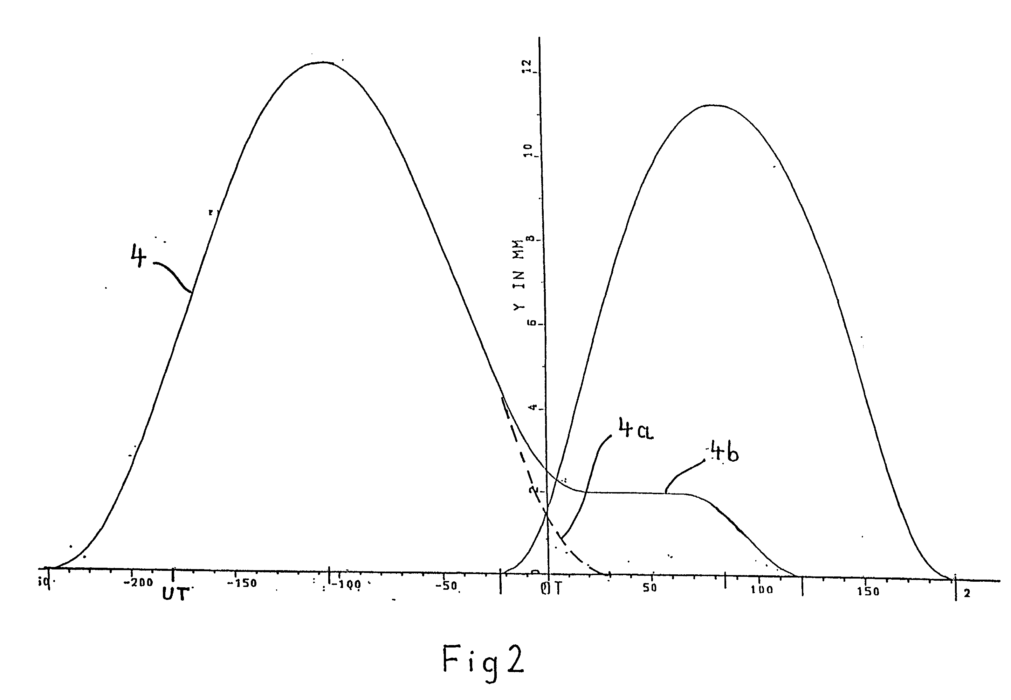

Das Verfahren zur Abgasrückführung gemäß Patentanspruch 1 ist in Figur 2 am Beispiel einer 6 Zylinder Brennkraftmaschine erläutert. Bei Motorbetrieb ohne Abgasrückführung öffnet ein zweiter Auslaß nach Kurve 4 zwischen 60° vor UT und 30° nach OT. Die strichlierte Linie 4a entspricht der Öffnung ohne Abgasrückführung.

Im Falle einer Abgasrückführung wird der zweite Auslaß gemäß dem Kurvenabschnitt 4b bis 120° nach OT offengehalten. Aus Fig. 1 erkennt man, daß nach Abklingen der Druckspitze 2b nach Öffnen des zweiten Auslasses bei offengehaltenen zweiten Auslaß Abgas mit der Druckspitze 2a aus einem ersten Auslaß eines ersten Zylinders in den zweiten Auslaß des zweiten Zylinders zurückströmt. Der erste und zweite Auslaß sind über einen gemeinsamen Auspuffkrümmer miteinander verbunden.

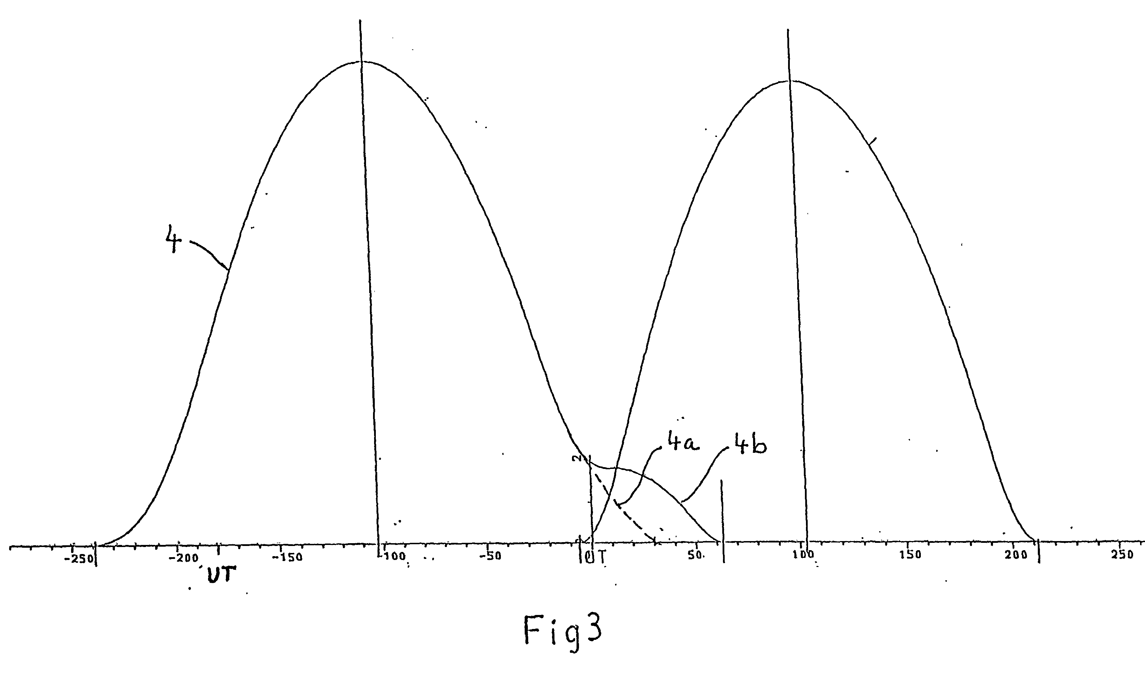

Figur 3 zeigt das Verfahren an Hand einer 4 Zylinder Brennkraftmaschine. Die Kurve 4 öffnet bei 60 ° vor UT und schließt bei 30° nach OT. Die strichlierte Linie 4a entspricht wieder der Öffnung ohne Abgasrückführung.

Im Falle einer Abgasrückführung wird der zweite Auslaß entsprechend der Kurve 4b bis 60° nach OT offengehalten. Somit kann Abgas aus einem ersten Auslaß wieder in einen zweiten Auslaß zurückströmen wenn beide über einen gemeinsamen Auspuffkrümmer verbunden sind.

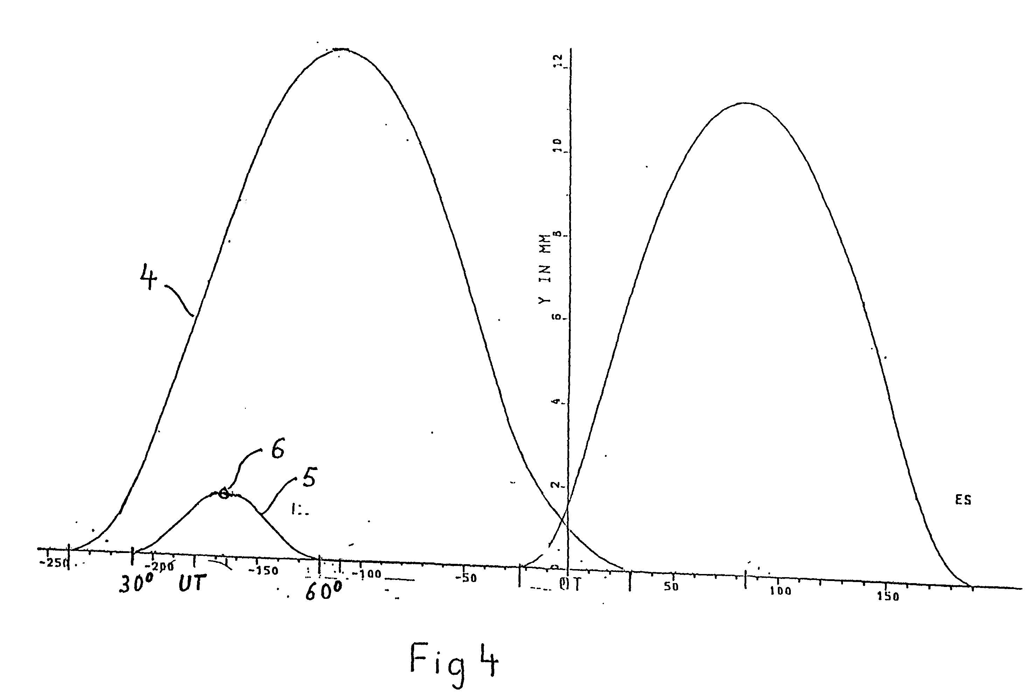

Ein weiteres erfindungsgemäßes Verfahren zur Abgasrückführung besteht darin, daß gegen Ende eines Expansionstaktes eines Zylinders ein Einlaß öffnet, so daß das unter Überdruck stehende Abgas in den Einlaß zurückströmt. Beim darauffolgenden Ansaugtakt wird dieses Abgas in den Zylinder zurückgeführt. Figur 4 zeigt die Kurve 4 eines Auslasses im Motorbetrieb. Der Auslaß öffnet bei 60° vor UT und schließt 30° nach OT. Ein Einlaß des gleichen Zylinders öffnet gemäß Kurve 5 30° vor UT und schließt 60° nach UT. Aus Figur 1 ist zu erkennen, daß im Punkt 3a noch erheblicher Überdruck im Abgas vorhanden ist, so daß Abgas bei Öffnen des Einlasses in diesen zurückströmt. Der Punkt 3a in Figur 1 entspricht dem Punkt 6 in Fig. 4.

Das erfindungsgemäß Verfahren nach den Ansprüchen 1 und 2 läßt sich bei freisaugenden und aufgeladenen Brennkraftmaschinen gleichermaßen anwenden. Nach Auswertung von Niederdruckindikatiordiagrammen lassen sich die Verfahrensmerkmale der Patentansprüche 1 und 2 bei verschiedensten mehrzylindrigen Brennkraftmaschinen anwenden.

## Patentansprüche

1. Verfahren zur internen Abgasrückführung für mehrzylindrige Brennkraftmaschinen, mit dem in vorbestimmten Betriebszuständen Teile des Abgases zurückgeführt werden können, **dadurch gekennzeichnet, daß** durch das Öffnen eines ersten Auslasses eines ersten Zylinders, welcher sich am Ende eines Expansionstakts befindet, eine Druckwelle entsteht, welche sich im gemeinsamen Abgaskrümmer fortpflanzt, daß während der Öffnung des ersten Auslasses ein zweiter Auslaß eines zweiten Zylinders, der sich in einem Ansaugtakt oderin einer frühen Phase eines Verdichtungstaktes befindet, über die für den eigentlichen Gaswechsel erforderliche Öffnungsdauer hinaus offen gehalten wird und daß durch die Druckwelle über den zweiten offengehaltenen Auslaß Abgas in den zweiten Zylinder zurückgeführt wird.

2. Verfahren zur internen Abgasrückführung für mehrzylindrige Brennkraftmaschinen, mit dem in vorbestimmten Betriebszuständen Teile des Abgases zurückgeführt werden können, **dadurch gekennzeichnet, daß** ein Einlaß eines im Expansionstakt befindlichen Zylinders gegen Ende der Expansion geöffnet wird, so daß durch die, zu diesem Zeitpunkt positive Druckdifferenz zwischen Zylinder und zugehörigem Einlaßkanal Abgas in diesen Einlaßkanal des Zylinders oder in eine davor liegende Leitung zurückströmt und daß die Rückführrate an Abgas durch Lage und Dauer der Öffnung des Einlasses gesteuert wird.

## Claims

1. A method of internal exhaust-gas recirculation for multi-cylinder internal-combustion engines, by means of which parts of the exhaust gas can be recirculated in predetermined operating states, **characterised in that**, by opening a first outlet of a first cylinder at the end of an expansion stroke, a pressure wave is formed which propagates in the common exhaust manifold, **in that**, during the opening of the first outlet, a second outlet of a second cylinder in an induction stroke or in an early phase of a compression stroke is held open beyond the opening time necessary for the actual gas exchange, and **in that** exhaust gas is recirculated into the second cylinder by the pressure wave via the second outlet which is held open.

2. A method of internal exhaust-gas recirculation for multi-cylinder internal-combustion engines, by means of which parts of the exhaust gas can be recirculated in predetermined operating states, **characterised in that** an inlet of a cylinder in the expansion stroke is opened towards the end of the expansion so that, owing to the now positive pressure difference between the cylinder and the associated intake port, exhaust gas flows back into this intake port of the cylinder or into a line arranged upstream thereof, and **in that** the recirculation rate of exhaust gas is controlled by the position and duration of opening of the inlet.

## Revendications

1. Procédé de réintroduction interne des gaz d'échappement dans un moteur à combustion interne à plusieurs cylindres, selon lequel, pour certains états de fonctionnement prédéterminés, on réintroduit une partie des gaz d'échappement,
**caractérisé en ce qu'**
en ouvrant un premier échappement d'un premier cylindre, qui se trouve à la fin d'un temps d'expansion, il se forme une onde de pression qui se développe dans la tubulure commune de gaz d'échappement,
pendant l'ouverture du premier échappement, un second échappement d'un second cylindre qui se trouve en phase d'aspiration ou dans une phase antérieure d'un temps de compression, est maintenu ouvert au-delà de la durée d'ouverture nécessaire pour l'échange de gaz proprement dit, et l'onde de pression fournit en retour à travers le second échappement maintenu ouvert, des gaz d'échappement au second cylindre.

2. Procédé de réintroduction interne de gaz d'échappement dans des moteurs à combustion interne à plusieurs cylindres, selon lequel, dans des états de fonctionnement prédéterminés, on réintroduit des parties des gaz d'échappement,
**caractérisé en ce qu'**
on ouvre une admission d'un cylindre se trouvant dans le temps d'expansion, vers la fin de l'expansion, de sorte que la différence de pression positive à cet instant entre le cylindre et le canal d'admission correspondant, renvoie un débit dans ce canal d'admission du cylindre ou dans une conduite qui est en amont, et le taux de réinjection des gaz d'échappement est commandé par la position et la durée de l'ouverture de l'admission.
